**Europäisches Patentamt**

**European Patent Office**

**Office européen des brevets**

(11) Veröffentlichungsnummer: **0 199 384**
**B1**

(12) **EUROPÄISCHE PATENTSCHRIFT**

(45) Veröffentlichungstag der Patentschrift:
**27.12.90**

(21) Anmeldenummer: **86200437.1**

(22) Anmeldetag: **19.03.86**

(51) Int. Cl.⁵: **G01D 5/26**

(54) **Optisches Messgerät.**

(30) Priorität: **23.03.85  DE 3510704**

(43) Veröffentlichungstag der Anmeldung:
**29.10.86 Patentblatt 86/44**

(45) Bekanntmachung des Hinweises auf die Patenterteilung:
**27.12.90 Patentblatt 90/52**

(84) Benannte Vertragsstaaten:
**DE FR GB**

(56) Entgegenhaltungen:
**EP-A- 0 021 199**
**EP-A- 0 091 826**
**GB-A- 1 540 907**

(73) Patentinhaber: **Philips Patentverwaltung GmbH,**
**Wendenstrasse 35 Postfach 10 51 49,**
**D-2000 Hamburg 1(DE)**

(84) Benannte Vertragsstaaten: **DE**

(73) Patentinhaber: **N.V. Philips' Gloeilampenfabrieken,**
**Groenewoudseweg 1, NL-5621 BA Eindhoven(NL)**

(84) Benannte Vertragsstaaten: **FR GB**

(72) Erfinder: **Martens, Gerhard, Dr., Hellhörn 1a,**
**D-2086 Ellerau(DE)**
Erfinder: **Helzel, Thomas, Oldesloerstrasse 107,**
**D-2000 Hamburg 61(DE)**

(74) Vertreter: **Kupfermann, Fritz-Joachim, Dipl.-Ing. et al,**
**Philips Patentverwaltung GmbH**
**Wendenstrasse 35 Postfach 10 51 49,**
**D-2000 Hamburg 1(DE)**

**Beschreibung**

Die Erfindung bezieht sich auf ein optisches Meßgerät mit einem optischen Sensor, der über eine optische Verzögerungsleitung und eine optische Strecke mit einem optischen Koppler verbunden ist, der über eine Verbindungsfaser an eine elektrooptische Wandlereinheit angeschlossen ist, die Lichtimpulse aussendet und empfängt und über mindestens eine elektrische Leitung Spannungsimpulse mit Amplituden, die den Intensitäten der empfangenen Lichtimpulse entsprechen, an eine Auswerteschaltung liefert, die aus den Amplituden eine vom optischen Sensor erfaßte physikalische Größe ermittelt und zur Anzeige bringt.

Aus der US-PS 42 93 188 ist ein optisches Meßgerät eingangs genannter Art mit einem optischen Drucksensor bekannt, in den frei bewegliche und parallel liegende Faserenden einer optischen Verzögerungsleitung und einer als Lichtleitfaser ausgebildeten optischen Strecke münden. Auf der den Stirnflächen der Faserenden gegenüberliegenden Seite ist ein Spiegel angeordnet, wobei sowohl auf den Stirnflächen der Faserenden als auch auf der Spiegelfläche lichtundurchlässige Schichten mit identischen Gitterstrukturen aufgetragen sind. Die beweglichen Faserenden sind mit einer elastischen Membrane mechanisch verbunden, so daß sich bei einer druckbedingten Auslenkung der Membrane die Faserenden und damit relativ zueinander auch die einander gegenüberliegenden, gitterförmigen Schichten bewegen und sich dadurch die Menge des vom Spiegel in die Faserenden zurückreflektierten Lichtes druckabhängig verändert. Durch Messung der Lichtstärke läßt sich der auf die Membrane einwirkende Druck ermitteln. Hierbei wird das Licht in dieselben Faserenden zurückreflektiert, von denen es abgestrahlt wird, so daß auch das vom Faserende der optischen Verzögerungsleitung abgestrahlte Licht wieder in die optische Verzögerungsleitung zurückreflektiert wird und dabei aufgrund des längeren Leitungsweges eine stärkere Dämpfung erfährt, als das über die kürzere optische Strecke geleitete Licht. Außerdem führen mechanische Belastungen, Änderungen der Umgebungstemperatur und eine alterungsbedingte Änderung der Übertragungseigenschaften der optischen Verzögerungsleitung zu zusätzlichen dämpfungsbedingten Meßfehlern. Zu deren Kompensation ist eine komplizierte Korrekturschaltung erforderlich, die auf den jeweiligen Grad der Dämpfung der durch die optische Verzögerungsleitung geleiteten Lichtimpulse abstimmbar sein muß.

Aus der EP-A-00 21 199 ist ferner eine faseroptische Sensoranordnung bekannt, bei der von einer Sendeeinheit eine Faser zum Sensorkopf führt und dessen Licht dort in zwei optische Signale verwandelt wird. Von diesen Signalen dient das eine Signal als Meßsignal und das andere Signal als Referenzsignal zur Phasenmessung. Die Umsetzung der Meßgröße in eine Phasenverschiebung der Intensitätsmodulation des primären Senderlichts geschieht mit Hilfe eines Sensorelements, das in einer Polariskopanordnung zwischen zwei Polarisationsteilern angeordnet ist und zwei nachgeschalteten optischen Strecken, die in einem Koppler wiedervereinigt werden. Im Koppler wird die meßgrößenabhängige Phasenverschiebung erzeugt. Diese Sensoranordnung ist relativ aufwendig, wendet Phasenverschiebungen an, arbeitet in Transmission und weist als Verbindungsstrecke zur Sensoranordnung drei Fasern zur Übertragung auf.

Aufgabe der vorliegenden Erfindung ist es, ein optisches Meßgerät zu schaffen, das einfach aufgebaut ist und von den Dämpfungseigenschaften einer optischen Verzögerungsleitung unabhängige, fehlerfreie Meßwerte liefert.

Diese Aufgabe wird bei einem optischen Meßgerät eingangs genannter Art dadurch gelöst, daß der optische Sensor einen von der optischen Strecke und von der optischen Verzögerungsleitung mit Lichtimpulsen beaufschlagten Polarisationteiler enthält, welcher die Lichtimpulse derart linear polarisiert, daß die Schwingungsebenen der von der optischen Strecke und der aus der optischen Verzögerungsleitung stammenden Lichtimpulse senkrecht aufeinander stehen, und hinter welchem ein von den polarisierten Lichtimpulsen durchstrahlter Sensorkörper angeordnet ist, der den Polarisationszustand der Lichtimpulse in Abhängigkeit der auf den Sensorkörper einwirkenden physikalischen Größe verändert und die Lichtimpulse mittels eines auf der lichtabgewandten Seite des Sensorkörpers aufgebrachten Spiegels auf den Polarisationsteiler zurückreflektiert, der aus jedem Lichtimpuls einen ersten linear polarisierten Lichtanteil ausfiltert und in die optische Verzögerungsleitung einkoppelt und einen zweiten linear polarisierten Lichtanteil ausfiltert, dessen Schwingungsebene senkrecht auf derjenigen des ersten Lichtanteiles steht, und in die optische Strecke einkoppelt.

Im optischem Sensor werden aus jedem von der elektrooptischen Wandlereinheit gelieferten Lichtimpuls drei Lichtimpulse erzeugt und zur elektrooptischen Wandlereinheit zurückgesandt. Sie treffen um jeweils eine über die Länge der optischen Verzögerungsleitung einstellbare Zeitspanne $\Delta t$ verzögert bei der elektrooptischen Wandlereinheit ein. Hierbei durchläuft der um eine Zeitspanne $\Delta t$ verzögerte zweite Lichtimpuls die optische Verzögerungsleitung einmal und der um zwei Zeitspannen $\Delta t$ verzögerte dritte Lichtimpuls die Verzögerungsleitung zweimal, so daß der Rechner durch Bilden des Verhältnisses der den Intensitäten der Lichtimpulse entsprechenden Amplitudenwerte der von der elektrooptischen Wandlereinheit gelieferten Spannungsimpulse Meßfehler aufgrund der in der optischen Verzögerungsleitung erfolgenden Dämpfung der Lichtimpulsintensitäten korrigieren kann. Außerdem werden dadurch Meßfehler aufgrund einer Dämpfung der Lichtimpulsintensitäten in der Verbindungsfaser und aufgrund von Lichtstärkeschwankungen des Lichtsenders ohne Verwendung einer zusätzlichen Korrekturschaltung korrigiert.

Um einen Druck, einen Differenzdruck oder eine als Druck auf den Sensorkörper einwirkende Kraft messen zu können, ist es vorteilhaft, den Sensorkörper aus lichtdurchlässigem, festem Material herzustellen und den spannungsoptischen Effekt auszunutzen.

Die Messung eines auf den optischen Sensor einwirkenden Magnetfeldes wird ermöglicht, wenn der Sensorkörper aus Yttrium-Eisen-Granat besteht.

Außerdem läßt sich ein auf den optischen Sensor einwirkendes elektrisches Feld messen, wenn der Sensorkörper aus Lithium-Niobat besteht.

Besteht der Sensorkörper aus Lithium-Tantalat oder kristallinem Quarz, ist der optische Sensor als Temperatursensor verwendbar.

Ein einfach aufgebauter und somit preisgünstig herstellbarer optischer Sensor ergibt sich, wenn der Polarisationsteiler als Polarisationsteilerwürfel ausgebildet ist, der genenüber den senkrecht aufeinander stehenden Längsachsen von mit dem optischen Sensor verbundenen Faserenden der optischen Verzögerungsleitung und der als Lichtleitfaser ausgebildeten optischen Strecke derart angeordnet ist, daß die Längsachsen der Faserenden auf je einer Außenfläche des Polarisationsteilerwürfels senkrecht stehen, der eine parallel zur Winkelhalbierenden der Längsachsen der Faserenden liegende Teilungsschicht aufweist, die Licht teils reflektiert und teil passieren läßt.

Durch eine zwischen dem Polarisationsteiler und dem Sensorkörper bzw. zwischen dem Sensorkörper und dem Spiegel angeordnete optische Verzögerungsplatte, die beispielsweise als λ/8-Platte ausgebildet sein kann, läßt sich der Arbeitspunkt des optischen Meßgerätes einstellen.

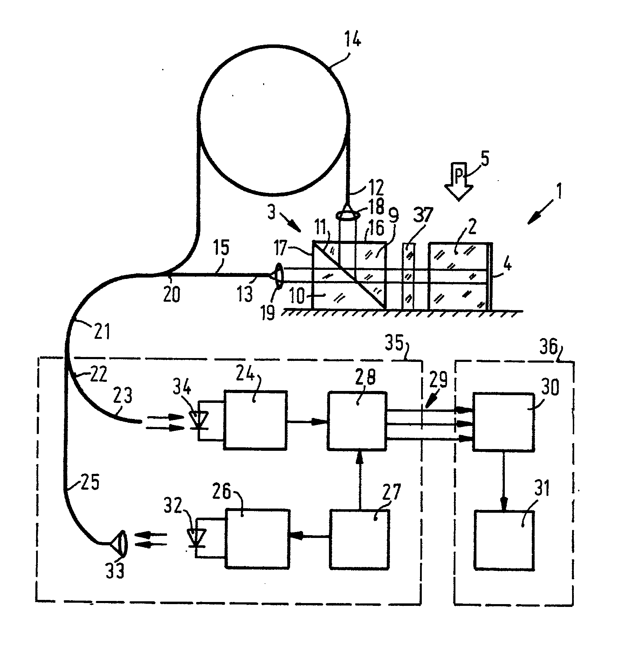

Ein Ausführungsbeispiel der Erfindung wird im folgenden anhand der Zeichnung beschrieben. Sie zeigt ein optisches Meßgerät mit einem optischen Sensor, der einen spannungsoptischen Sensorkörper enthält.

Das optische Meßgerät weist einen optischen Sensor 1 auf, der einen lichtdurchlässigen Sensorkörper 2 und einen Polarisationsteilerwürfel 3 enthält. Zwischen dem Sensorkörper 2 und dem Polarisationsteilerwürfel 3 kann eine optische Verzögerungsplatte 37 angeordnet sein, die vorzugsweise als λ/8-Platte ausgebildet ist. Eine derartige Verzögerungsplatte kann auch zwischen Sensorkörper 2 und Spiegel 4 angeordnet sein.

Der in der Figur dargestellte Sensorkörper 2 ist ein spannungsoptischer Sensorkörper, der aus einem lichtdurchlässigen festen Material wie z.B. aus Quarzglas oder aus lichtdurchlässigem Kunststoff bestehen kann. Auf der dem Polarisationsteilerwürfel 3 abgewandten Seite des Sensorkörpers 2 ist ein Spiegel 4 angebracht. In Richtung des Pfeiles 5 wirkt ein Druck P derart auf den Sensorkörper 2 ein, daß die entstehenden Hauptspannungsachsen in dem vom Licht durchstrahlten Bereich des Sensorkörpers 2 mit der Zeichenebene einen Winkel von 45° bilden.

Der Sensorkörper 2 kann auch aus Yttrium-Eisen-Granat, das den Polarisationszustand von Licht in Abhängigkeit eines auf den Sensorkörper 2 einwirkenden Magnetfeldes verändert, aus Lithium-Niobat, das den Polarisationszustand von Licht in Abhängigkeit eines elektrischen Feldes verändert oder auch aus Lithium-Tantalat bestehen, das den Polarisationszustand von Licht in Abhängigkeit der Temperatur des Sensorkörpers 2 verändert. Weiterhin kann der Sensorkörper 2 aus kristallinem Quarz bestehen, das den Polarisationszustand von Licht ebenfalls in Abhängigkeit der Temperatur verändert.

Der Polarisationsteilerwürfel 3 besteht aus zwei 90°-Prismen 9 und 10 aus Flintglas, die über eine Teilungsschicht 11 miteinander verkittet sind. Diese reflektiert den senkrecht zur Zeichenebene schwingenden, linear polarisierten Anteil von in den Polarisationsteilerwürfel 3 eingestrahltem Licht und läßt den waagerecht zur Zeichenebene schwingenden, linear polarisierten Anteil des Lichtes passieren. Die Teilungsschicht 11 ist aus mehreren Lagen dielektrischen Materials gebildet, die beispielsweise abwechselnd aus Zinksulfid und Kryolith bestehen können.

Die Faserenden 12 und 13 einer optischen Verzögerungsleitung 14 und einer als Lichtleitfaser ausgebildeten optischen Strecke 15 sind so ausgerichtet, daß deren Längesachsen senkrecht aufeinander und senkrecht auf je einer Außenfläche 16 und 17 des Polarisationsteilerwürfels 3 stehen. Somit fällt das vom Faserende 12 abgestrahlte Licht über eine Linse 18 senkrecht zur Außenfläche 16 und das vom Faserende 13 abgestrahlte Licht über die Linse 19 senkrecht zur Außenfläche 17 in den Polarisationsteilerwürfel 3 ein. Der Sensorkörper 2 ist derart angeordnet, daß ihn sowohl das vom Faserende 12 abgestrahlte und von der Teilungsschicht 11 reflektierte als auch das vom Faserende 13 abgestrahlte und die Teilungsschicht 11 passierende Licht durchstrahlt. Vom Spiegel 4 wird das Licht derart auf den Polarisationsteilerwürfel 3 zurückreflektiert, daß von der Teilungsschicht 11 Licht über die Linse 18 auf die Stirnfläche des Faserendes 12 gelenkt wird und Licht, welches die Teilungsschicht 11 passiert, von der Linse 19 auf die Stirnfläche des Faserendes 13 gelenkt wird.

Die optische Verzögerungsleitung 14 kann als Spulenkörper ausgebildet sein, auf den mehrere Lagen Glasfaserkabel aufgewickelte sind. Die optische Verzögerungsleitung 14 und die als Lichtleitfaser ausgebildete optische Strecke 15 sind über einen optischen Koppler 20 miteinander verbunden, der in dem in der Figur dargestellten Ausführungsbeispiel als Faserkoppler ausgebildet ist. Der optische Koppler 20 kann aber auch als Strahlteiler mit einem semipermeablen Spiegel ausgebildet sein, der Licht teilweise reflektiert und in die optische Verzögerungsleitung 14 einkoppelt, und teilweise passieren läßt, so daß es über die Linse 19 auf den Polarisationsteilerwürfel 3 projiziert wird. Eine Lichtleitfaser als optische Strecke 15 ist hierbei nur dann erforderlich, wenn der als Strahlteiler ausgebildete optische Koppler 20 in einem größeren Abstand von der Linse 19 angeordnet ist. Die Vorrichtungselemente 1 bis 20 können hierbei in einem Gehäuse angeordnet sein.

Über eine Verbindungsfaser 21 von beliebiger Länge ist der optische Koppler 20 mit der elektrooptischen Wandlereinheit 35 verbunden, die eine mit der Verbindungsfaser 21 verbundene Lichtleiterabzweigung 22 enthält, von der ein erster Verbindungslichtleiter 23, der mit einem Lichtempfänger 24 optisch verbunden ist und ein zweiter Verbindungslichtleiter 25 abzweigen, der mit einem Lichtsender 26 optisch verbunden ist. Die Lichtleiterabzweigung 22 ist in dem in der Figur dargestellten Ausführungsbeispiel als Faserkoppler ausgebildet.

Der Lichtsender 26 wird von einem elektrischen Impulsgeber 27 gesteuert. Der Lichtempfänger 24 ist an einen Demultiplexer 28 angeschlossen, der die vom Lichtempfänger 24 seriell gelieferten Spannungsimpulse unter Verwendung der vom Impulsgeber 27 gelieferten Spannungsimpulse auf drei parallel liegende Ausgangsleitungen 29 aufteilt und einem Rechner 30 zuführt. Der Rechner 30 ist Teil einer Auswerteschaltung 36 und kann beispielsweise als Microcomputer ausgebildet sein, der den auf den Sensorkörper 2 einwirkenden Druck P aus den Amplituden $I_1$, $I_2$ und $I_3$ dreier über die drei Ausgangsleitungen 29 gleichzeitig übertragener Spannungsimpulse anhand der Beziehung

$$P = K \cdot \arctan \sqrt{I_2/(2 \sqrt{I_1 I_3})} \quad +a$$

ermittelt, wobei a $=\pi/4$, wenn die Verzögerungsplatte 37 als $\lambda/8$-Platte ausgebildet ist. Ansonsten läßt sich a aus der Beziehung $a = 2\pi/n$ ermitteln, wenn die optische Verzögerungsplatte 37 eine $\lambda/n$-Platte ist. K bedeutet eine vom Aufbau des Meßgerätes abhängige Eichkonstante.

Der Druck P kann im Rechner 30 auch anhand der Beziehung

$$P = L \arccos\left[(I_1 - I_2 \cdot 0,5 \sqrt{I_1/I_3}) /(I_1 + I_2 \cdot 0,5 \sqrt{I_1/I_3})\right] +b$$

errechnet werden, wobei L eine vom Aufbau des optischen Meßgerätes abhängige Eichkonstante bedeutet und b gleich $\pi/2$ ist, wenn die Verzögerungsplatte 37 als $\lambda/8$-Platte ausgebildet ist. Ansonsten beträgt b $=4\pi/n$, wenn die optische Verzögerungsplatte 37 eine $\lambda/n$-Platte ist.

Die Auswerteschaltung 36 enthält eine Anzeigevorrichtung 31, die den vom Rechner 30 ermittelten Druck P zur Anzeige bringt. Der Druckmeßwert P kann auch über einen in der Figur nicht dargestellten Datenbus einem ebenfalls nicht dargestellten Computer zur Weiterverarbeitung zugeführt werden.

Im Takt der vom Impulsgeber 27 dem Lichtsender 26 gelieferten Spannungsimpulse strahlt eine mit dem Lichtsender 26 verbundener Leuchtdiode 32 Lichtimpulse ab, die von einer Linse 33 in den zweiten Verbindungslichtleiter 25 eingekoppelt werden. Die Leuchtdiode 32 kann beispielsweise als Laserdiode ausgebildet sein. Ein Lichtimpuls durchläuft den zweiten Verbindungslichtleiter 25 und die Verbindungsfaser 21 und wird von dem optischen Koppler 20 auf die optische Strecke 15 und die optische Verzögerungsleitung 14 aufgeteilt. Aufgrund des längeren Signalweges verläßt der durch die Verzögerungsleitung 14 geleitete Impuls das Faserende 12 um die Zeitspanne $\Delta t$ später als der über die optische Strecke 15 geleitete Impuls das Faserende 13. Dieser letztere Impuls gelangt zunächst über die Linse 19 auf den Polarisationsteilerwürfel 3, dessen Teilungsschicht 11 den parallel zur Zeichenebene schwingenden, linear polarisierten Anteil dieses Impulses passieren läßt, der durch die optische Verzögerungsplatte 37 auf den Sensorkörper 2 gelangt.

Um die Zeit $\Delta t$ später gelangt der durch die optische Verzögerungsleitung 14 geleitete Impuls über die Linse 18 auf den Polarisationsteilerwürfel 3, dessen Teilungsschicht 11 hiervon den senkrecht zur Zeichenebene schwingenden, linear polarisierten Anteil durch die optische Verzögerungsplatte 37 auf den Sensorkörper 2 reflektiert.

Je größer der auf den spannungsoptischen Sensorkörper 2 einwirkende Druck P ist, um so mehr werden die den Sensorkörper 2 durchlaufenden und vom Spiegel 4 wieder zurückreflektierten Impulse elliptisch polarisiert. Eine optische Verzögerungsplatte 37 bewirkt hierbei, daß die Impulse bereits dann elliptisch polarisiert werden, wenn kein Druck P auf den Sensorkörper 2 einwirkt.

Wirkt beispielsweise ein geringer Druck P auf den Sensorkörper 2 ein, liegt die große Achse der Polarisationsellipse des unverzögerten Lichtimpulses parallel zur Zeichenebene, während diejenige des in der optischen Verzögerungsleitung um die Zeitspanne $\Delta t$ verzögerten Lichtimpulses senkrecht auf der Zeichenebene steht. Die Teilungsschicht 11 läßt jeweils die parallel zur Zeichenebene schwingenden, linear polarisierten Anteile dieser beiden elliptisch polarisierten Impulse passieren, die anschließend von der Linse 19 in die optische Strecke 15 eingekoppelt werden, und reflektiert die jeweils senkrecht zur Zeichenebene schwingenden, linear polarisierten Anteile dieser beiden elliptisch polarisierten Impulse auf die Linse 18, welche diese Impulse in die optische Verzögerungsleitung 14 einkoppelt. Diese beiden Impulse treffen um die Zeitspanne $\Delta t$ später als die durch die optische Strecke 15 geleiteten Lichtimpulse beim optischen Koppler 20 ein.

4

Beim optischen Koppler 20 trifft somit zunächst ein Lichtimpuls ein, der von der optischen Strecke 15 abgestrahlt und wieder in die optische Strecke 15 zurückgekoppelt wird und somit in der optischen Verzögerungsleitung 14 keine Zeitverzögerung erfährt. Die Intensität $I_1$ dieses Impulses nimmt mit wachsendem Druck P ab. Weiterhin treffen am optischen Koppler 20 um die Zeitspanne $\Delta$ t verzögerte Lichtimpulse ein, die zum einen von der optischen Strecke 15 abgestrahlt und nach Durchlaufen des optischen Sensors 1 in die optische Verzögerungsleitung 14 eingekoppelt werden und zum anderen von der optischen Verzögerungsleitung 14 abgestrahlt und in die optische Strecke 15 eingekoppelt werden und deren Intensitäten $I_2/2$ proportional zur Größe des auf den Sensorkörper 2 einwirkenden Druckes P sind.

Schließlich trifft am optischen Koppler 20 ein Lichtimpuls ein, der von der optischen Verzögerungsleitung 14 abgestrahlt und in die optische Verzögerungsleitung 14 wieder zurückgekoppelt wird und der somit eine Zeitverzögerung von 2 . $\Delta$ t erfährt. Die Intensität $I_3$ dieses Impulses nimmt mit wachsendem Druck P ab. Diese drei nacheinander am optischen Koppler 20 eintreffenden Lichtimpulse werden über die Verbindungsfaser 21, die Lichtleiterabzweigung 22 und den ersten Verbindungslichtleiter 23 zum Lichtempfänger 24 weitergeleitet, der die Lichtimpule beispielsweise mittels einer Fotodiode 34 in drei serielle Spannungsimpulse mit den Amplituden $I_1$, $I_2$ und $I_3$ umwandelt. Diese drei Spannungsimpulse werden vom Demultiplexer 28 auf die drei Ausgangsleitungen 29 verteilt und dem Rechner 30 zugeführt, welcher aus deren Amplituden den auf den Sensorkörper 2 einwirkenden Druck ermittelt und einer Anzeigevorrichtung 31 zuführt.

**Patentansprüche**

1. Optisches Meßgerät mit einem optischen Sensor (1), der über eine optische Verzögerungsleitung (14) und eine optische Strecke (15) mit einem optischen Koppler (20) verbunden ist, der über eine Verbindungsfaser (21) an eine elektrooptische Wandlereinheit (35) angeschlossen ist, die Lichtimpulse aussendet und empfängt und über mindestens eine elektrische Leitung (29) Spannungsimpulse mit Amplituden, die den Intensitäten der empfangenen Lichtimpulse entsprechen, an eine Auswerteschaltung (36) liefert, die aus den Amplituden ein vom optischen Sensor (1) erfaßte physikalische Größe ermittelt und zur Anzeige bringt, dadurch gekennzeichnet, daß der optische Sensor (1) einen von der optischen Strecke (15) und von der optischen Verzögerungsleitung (14) mit Lichtimpulsen beaufschlagten Polarisationsteiler (3) enthält, welcher die Lichtimpulse derart linear polarisiert, daß die Schwingungsebenen der von der optischen Strecke (15) und der aus der optischen Verzögerungsleitung (14) stammenden Lichtimpulse senkrecht aufeinanderstehen und hinter welchem ein von den polarisierten Lichtimpulsen durchstrahlter Sensorkörper (2) angeordnet ist, der den Polarisationszustand der Lichtimpulse in Abhängigkeit der auf den Sensorkörper (2) einwirkenden physikalischen Größe verändert und die Lichtimpulse mittels eines auf der lichtabgewandten Seite des Sensorkörpers (2) aufgebrachten Spiegels (4) auf den Polarisationsteiler zurückreflektiert, der aus jedem Lichtimpuls einen ersten linear polarisierten Lichtanteil ausfiltert und in die optische Verzögerungsleitung (14) einkoppelt und einen zweiten linear polarisierten Lichtanteil ausfiltert, dessen Schwingungsebene senkrecht auf derjenigen des ersten Lichtanteiles steht, und in die optische Strecke (15) einkoppelt.

2. Optisches Meßgerät nach Anspruch 1, dadurch gekennzeichnet, daß der optische Sensor (1) als Drucksensor mit einem aus lichtdurchlässigem, festem Material bestehenden spannungsoptischen Sensorkörper (2) ausgebildet ist.

3. Optisches Meßgerät nach Anspruch 1, dadurch gekennzeichnet, daß der optische Sensor (1) als Magnetfeldsensor mit einem aus Yttrium-Eisen-Granat bestehenden Sensorkörper (2) ausgebildet ist.

4. Optisches Meßgerät nach Anspruch 1, dadurch gekennzeichnet, daß der optische Sensor (1) als Sensor für elektrische Felder mit einem aus Lithium-Niobat bestehenden Sensorkörper (2) ausgebildet ist.

5. Optisches Meßgerät nach Anspruch 1, dadurch gekennzeichnet, daß der optische Sensor (1) als Temperatursensor mit einem aus Lithium-Tantalat oder kristallinem Quarz bestehenden Sensorkörper (2) ausgebildet ist.

6. Optisches Meßgerät nach einem der Ansprüche 1 bis 5, dadurch gekennzeichnet, daß der Polarisationsteiler als Polarisationsteilerwürfel (3) ausgebildet ist, der gegenüber den senkrecht aufeinanderstehenden Längsachsen von mit dem optischen Sensor (1) verbundenen Faserenden (12, 13) der optischen Verzögerungsleitung (14) und der als Lichtleitfaser ausgebildeten optischen Strecke (15) derart angeordnet ist, daß die Längsachsen der Faserenden (12, 13) auf je einer Außenfläche (16, 17) des Polarisationsteilerwürfels (3) senkrecht stehen, der eine parallel zur Winkelhalbierenden der Längsachsen der Faserenden (12, 13) liegende Teilungsschicht (11) aufweist, die Licht teils reflektiert und teils passieren läßt.

7. Optisches Meßgerät nach einem der Ansprüche 1 bis 6, dadurch gekennzeichnet, daß zwischen dem Polarisationsteiler (3) und dem Sensorkörper (2) und/oder zwischen dem Sensorkörper (2) und dem Spiegel (4) eine optische Verzögerungsplatte (37) angeordnet ist.

8. Optisches Meßgerät nach Anspruch 7, dadurch gekennzeichnet, daß die optische Verzögerungsplatte (37) als $\lambda/8$-Platte ausgebildet ist.

# EP 0 199 384 B1

## Claims

1. An optical measuring device comprising an optical sensor (1), which is connected to an optical coupler (20) via an optical delay line (14) and an optical path (15), which coupler is connected to an electro-optical transducer unit (35) by a connecting fibre (21), which transducer unit supplies and receives light pulses and which supplies voltage pulses whose amplitudes correspond to the intensities of the received light pulses to a processing circuit (36) via at least one electrical line (29), which processing circuit determines the physical quantity detected by the optical sensor (11) from said amplitudes and displays said quantity, characterized in that the optical sensor (1) comprises a polarisation splitter (3) which receives light pulses from the optical path (15) and from the optical delay line (14) and which polarises the light pulses linearly in such a way that the planes of polarisation of the light pulses issuing from the optical path (15) and from the optical delay line (14) extend perpendicularly to each other, which polarisation splitter is followed by a sensor body (2) which is traversed by the polarised light pulses, which changes the state of polarisation of the light pulses depending on the physical quantity which acts on the sensor body (2), and which reflects the light pulses back to the polarisation splitter by means of a mirror (4) arranged on that side of the sensor body (2) which is remote from the side where the light is incident, which polarisation splitter extracts a first linearly polarised light component from each light pulse and couples said component into the optical delay line (14), and which extracts a second linearly polarised light component, whose plane of polarisation extends perpendicularly to that of the first light component, and couples said component into the optical path (15).

2. An optical measuring device as claimed in Claim 1, characterized in that the optical sensor (1) is constructed as a pressure sensor comprising a piezooptical sensor body (2) of a light-transmitting solid material.

3. An optical measuring device as claimed in Claim 1, characterized in that the optical sensor (1) is constructed as a magnetic field sensor comprising a sensor body (2) of yttrium-iron garnet.

4. An optical measuring device as claimed in Claim 1, characterized in that the optical sensor (1) is constructed as an electric field sensor comprising a sensor body (2) of lithium-niobate.

5. An optical measuring device as claimed in Claim 1, characterized in that the optical sensor (1) is constructed as a temperature sensor comprising a sensor body (2) of lithium-tantalate or crystalline quartz.

6. An optical measuring device as claimed in any one of the Claims 1 to 5, characterized in that the polarisation splitter is constructed as a polarisation-splitter prism (3) which is arranged opposite the mutually perpendicular longitudinal axes of the fibre ends (12, 13) of the optical delay line (14), which fibre ends are connected to the optical sensor (1), and of the optical fibre forming the optical path (15) in such a way that the longitudinal axes of the fibre ends (12, 13) each extend perpendicularly to an exterzior surface (16, 17) of the polarisation-splitter prism (3), which comprises a splitting layer (11) which is disposed parallel to the bisector of the longitudinal axes of the fibre ends (12, 13), which layer reflects part of the light and transmits part of the light.

7. An optical measuring device as claimed in any one of the Claims 1 to 6, characterized in that an optical retardation plate (37) is arranged between the polarisation splitter (3) and the sensor body (2) and/or between the sensor body (2) and the mirror (4).

8. An optical measuring device as claimed in Claim 7, characterized in that the optical retardation plate (37) is constructed as a $\lambda/8$ plate.

## Revendications

1. Appareil de mesure optique comportant un capteur optique (1) qui est connecté, par l'intermédiaire d'une ligne à retard optique (14) et d'un parcours optique (15), à un coupleur optique (20) qui est relié, par l'intermédiaire d'une fibre de liaison (21), à un transducteur électro-optique (35) qui émet et reçoit des impulsions lumineuses et qui, par l'intermédiaire d'une ligne électrique (29), fournit des impulsions de tension, dont les amplitudes correspondent aux intensités des impulsions lumineuses reçues, à un circuit d'évaluation (36) qui, à partir des amplitudes, détermine une grandeur physique détectée par le capteur optique (1) et l'affiche, caractérisé en ce que le capteur optique (1) contient un séparateur de polarisation (3) qui reçoit des impulsions lumineuses du parcours optique (15) et de la ligne à retard optique (14), qui soumet les impulsions lumineuses à une polarisation linéaire telle que les plans d'oscillation des impulsions lumineuses provenant du parcours optique (15) et de la ligne à retard optique (14) soient perpendiculaires l'un à l'autre et derrière lequel est installé un élément capteur (2) traversé par les impulsions lumineuses polarisées, qui modifie l'état de polarisation des impulsions lumineuses en fonction de la grandeur physique dont il subit l'action et réfléchit les impulsions lumineuses, au moyen d'un miroir (4) monté du côté de l'élément capteur (2) qui est éloigné de la lumière, sur le séparateur de polarisation qui sépare par filtrage, de chaque impulsion lumineuse, une première fraction de lumière à polarisation linéaire pour l'introduire dans la ligne à retard optique (14) et une seconde fraction de lumière à polarisation linéaire dont le plan d'oscillation est perpendiculaire à celui de la première fraction de lumière, pour l'introduire dans le parcours optique (15).

2. Appareil de mesure optique suivant la revendication 1, caractérisé en ce que le capteur optique (1) a la forme d'un capteur de pression présentant un élément capteur (2) photoélastique fait d'une matière solide transparente.

3. Appareil de mesure optique suivant la revendication 1, caractérisé en ce que le capteur optique (1) a la forme d'un capteur de champ magnétique présentant un élément capteur (2) en ferrite grenat d'yttrium.

4. Appareil de mesure optique suivant la revendication 1, caractérisé en ce que le capteur optique (1) a la forme d'un capteur pour des champs électriques présentant un élément capteur (2) en niobate de lithium.

5. Appareil de mesure optique suivant la revendication 1, caractérisé en ce que le capteur optique (1) a la forme d'un capteur de température présentant un élément capteur (2) en tantalate de lithium ou en quartz cristallin.

6. Appareil de mesure optique suivant l'une quelconque des revendications 1 à 5, caractérisé en ce que le séparateur de polarisation a la forme d'un cube séparateur de polarisation (3) qui est disposé, par rapport aux axes longitudinaux perpendiculaires l'un à l'autre des extrémités de fibres (12, 13) de la ligne à retard optique (14) et du parcours optique (15) ayant la forme d'une fibre optique, qui sont reliés au capteur optique (1) d'une manière telle que les axes longitudinaux des extrémités de fibres (12, 13) soient chaque fois perpendiculaires à une face extérieure (16, 17) du cube séparateur de polarisation (3) qui présente une couche de séparation (11) parallèle à la bissectrice des axes longitudinaux des extrémités de fibres, qui réfléchit la lumière pour partie et la laisse passer pour partie.

7. Appareil de mesure optique suivant l'une quelconque des revendications 1 à 6, caractérisé en ce qu'une lame à retard optique (37) est disposée entre le séparateur de polarisation (3) et l'élément capteur (2) et/ou entre l'élément capteur (2) et le miroir (4).

8. Appareil de mesure optique suivant la revendication 7, caractérisé en ce que la lame à retard optique (37) a la forme d'une lame $\lambda/8$.